# EUROPEAN PATENT SPECIFICATION

(11) **EP 2 309 146 B1**
(45) Date of publication and mention of the grant of the patent: **16.11.2011**
(21) Application number: 09425362.2
(22) Date of filing: 18.09.2009
(51) Int. Cl.: F16D 65/00

(54) **Disk brake pad**
Scheibenbremsklotz
Plaquette de frein à disque

(43) Date of publication of application: 13.04.2011
(73) Proprietor: Lupica, Fabrizio, 10143 Torino (IT); Gucciardi, Domenico, 10149 Torino (IT); IDLOS BV, 1017 DK Amsterdam (NL)
(72) Inventor: Lupica, Fabrizio, 10143 Torino (IT); Gucciardi, Domenico, 10149 Torino (IT)
(74) Representative: Robba, Pierpaolo

(56) References cited:
- DE-A1- 4 401 846
- DE-A1- 19 846 887
- DE-A1-102006 051 972
- DE-U1-202005 009 278

## Description

### Technical field

The present invention relates to a disk brake pad.

More precisely, the invention relates to a disk brake pad of the kind equipped with means for collecting the powders produced due to the wear of the friction material, aiming therefore at reducing the primary pollution caused by the dispersion of such powders into the environment.

### Prior art

Disk brake pads are commonly used in vehicles of any kind, in particular motor vehicles, such as motor cars, motorcycles, railroad vehicles and so on.

As known, brake pads consist of a supporting base to which a layer of friction material adheres. The layer of friction material generates a friction on the brake disk when the material is pressed against the disk due to a push, generally obtained by hydraulic pistons, against the supporting base. In the past, the friction material mainly consisted of a mixture of several materials where asbestos was prevailing. At present however use of such material is prohibited and this kind of mixture is nowadays mostly replaced by mixtures mainly comprising binding resins, metals, abrasives and lubricants.

Analyses carried out on the powders produced due to the wear of the currently used friction material reveal the presence of metal substances, such as zinc, copper, barium, aluminium, magnesium, iron, calcium, potassium, sulphur, silicon and sodium, many of which, as known, are noxious to living beings.

As known, the problem of how to reduce dispersion into the environment of powders produced due to the wear of the friction material of the brake pads is a highly topical subject and is of paramount importance for human health.

Analyses carried out on said powders reveal the presence of several metals and substances which are noxious especially in case of inhalation.

Therefore several solutions have been developed in the past in an attempt to remedy the above problem.

A first group of solutions, such as for instance the ones disclosed in EP 1256739, DE 102005006465 and WO 8102690, exploit the phenomenon of the magnetic attraction of metal particles in order to avoid powder dispersion into the environment.

More complex solutions, such as for instance the one disclosed in DE 4240873, associate the brake assembly with an independent sucking unit equipped with ducts and a collecting reservoir.

Other solutions, such as for instance the one disclosed in US 2007/0000740; associate the brake assembly with a collecting device that mechanically captures the powder produced due to the wear of the pads.

In other cases, solutions have been adopted according to which the brake pad itself is equipped with powder capturing means, An example of a brake pad of the above kind is disclosed in JP 11311272.

The solution disclosed in the latter document is however unsuitable, since it provides for collecting the powder through a bead of a material arranged around the friction material, which bead consequently wears during use of the pad and moreover is not capable of retaining the great amount of powder produced upon a prolonged use.

The other prior art solutions have not proved practically feasible and sufficiently effective in order to avoid powder dispersion, and moreover they proved to be expensive and complex to manufacture so that, in the absence of a rule compelling to install them, they have not been commercially successful. Moreover, such solutions generally have the drawback that they do not allow removal of the collected powder, or they make such removal difficult, in particular before the brake pad needs to be replaced, with the result that the collecting effect of the prior art devices is often made fruitless after a reduced mileage due to the non-removal of the accumulated powder.

From DE 44 01 846 A1 it is also known in the art to provide a friction lining of a brake pad with at least one air duct connectable to a source of compressed air. The air-duct extends through the whole thickness of the friction lining, from the backplate to the friction surface of the brake pad. The backplate has a hole through opening into the air duct for connecting a compressed air pipe. This solution has the purpose of letting compressed air to flow through the friction lining so as to exhaust the heat generated.

DE 198 46 887 on which the preamble of claim 1 is based discloses a disk brake pad comprising a supporting base with which a layer of friction material is associated and a powder collecting chamber defined in correspondence of the supporting base for collecting the powders produced due to the wear of the friction material.

It is a main object of the present invention to provide an improved solution to the problem of how to avoid dispersion of the powders produced due to the wear of the friction material of the disk brake pads, with the main purpose of reducing the primary pollution caused by the dispersion of such powders into the environment.

It is another object of the present invention to provide a solution to the above problem, which solution moreover allows effectively collecting the powders produced due to the wear of the friction material in order to allow the disposal and possibly the recycling of the same powders, for instance for manufacturing new brake pads.

It is a further, but not the last object of the invention to provide a brake pad that can be industrialised with limited costs and that therefore is suitable for large scale manufacturing with costs that are little higher than the costs of conventional brake pads.

### Description of the invention

The above and other objects are achieved through the disk brake pad as claimed in the appended claims.

The brake pad according to the invention mainly differs from the conventional pads in that it has a hollow supporting base provided with at least one channel communicating with the surface of the supporting base with which the layer of friction material is associated, said channel being also arranged to pass through the friction material when the channel is provided in correspondence of the portion of said surface covered by said layer.

A further advantage of the invention is the provision of a second collecting chamber communicating with the first chamber in the supporting base and removable for the removal of the material accumulated therein.

Thanks to such a second chamber, a solution is provided that allows effectively collecting the powders produced due to the wear of the friction material in order to allow the disposal and possibly the recycling of the same powders, for instance for manufacturing new brake pads.

Advantageously, the collecting device according to the invention allows further reducing dispersion of the powders produced due to the wear of the pad through a mechanical action. Moreover, thanks to the removable internal lining of the collecting device, powder collection advantageously takes place effectively and by using means with limited cost.

A further, but not the last advantage of the invention is the provision of magnetic fields inside both chambers, which fields are capable of exerting a magnetic attracting force on the particles of material produced due to the wear of the friction layer and the brake disk.

The brake pad according to the invention can be advantageously manufactured with limited modifications to the structure of the conventional pads.

A further advantage of the invention is moreover the possibility of housing the brake pad according to the invention within the existing brake assemblies, without need to modify them.

### Brief Description of the Figures

A description of a preferred embodiment of the invention, given only by way of non limiting example, will be provided hereinafter with reference to the accompanying Figures, in which:
- Fig. 1 is a front view of the brake pad according to the invention;
- Fig. 2 is a schematic cross-sectional view taken along line II - II in Fig. 1,
- Fig. 3 is an enlarged view of a detail of Fig. 2:
- Fig. 4 is an exploded view of the collecting member;
- Fig. 5 is a cross-sectional view of the collecting member;
- Fig. 6 is an overall view of a disk brake assembly incorporating the invention.

### Description of a Preferred Embodiment

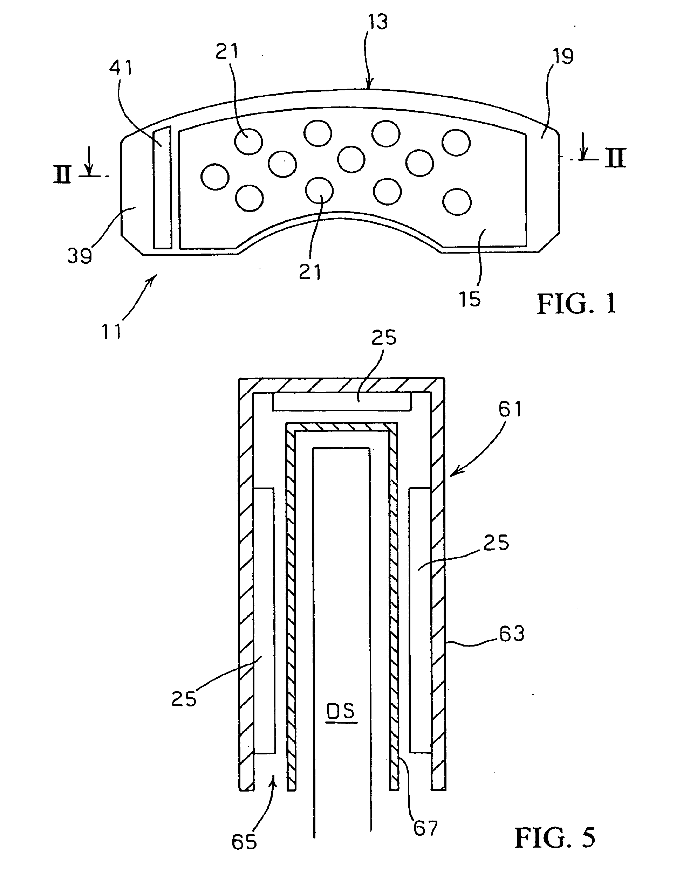

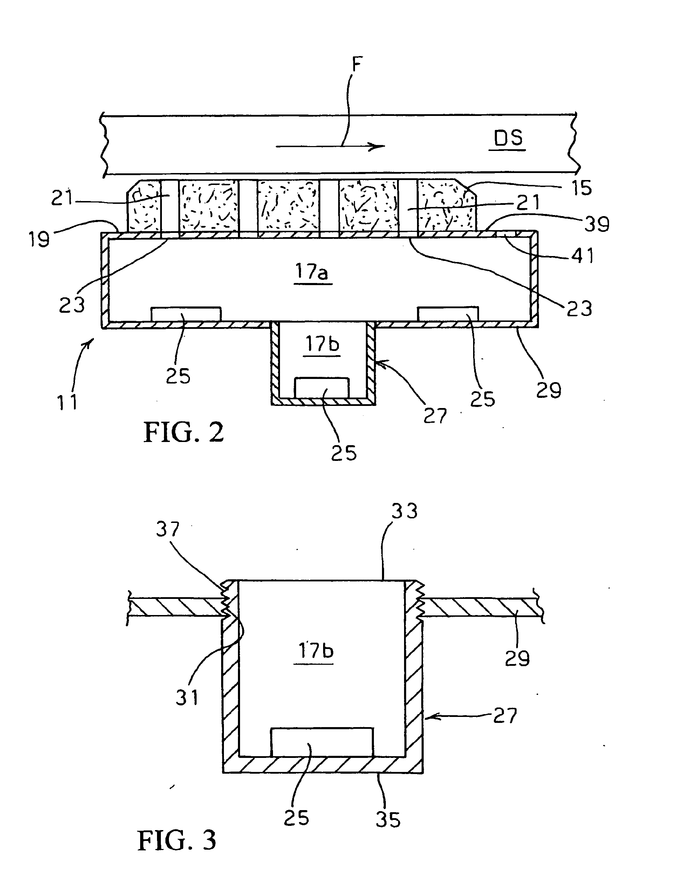

With reference to Figs. 1 to 3, the brake pad according to the invention, which has been generally denoted by reference numeral 11, comprises a supporting base 13, made for instance of metal, in which, according to the invention, a first collecting chamber 17a is defined. Moreover, base 13 has associated therewith, in conventional manner, an external layer 15 of friction material intended to slow the rotation of disk DS, of which the prevailing rotation direction is shown by arrow "F". According to a preferred embodiment of the invention, layer 15 of friction material, adhering to wall 19 of supporting base 13, is passed through by at least one channel 21 communicating with the first collecting chamber 17a through a corresponding channel 23 formed in wall 19 of supporting base 13.

Said channels 21 and 23 can be either perpendicular to the surface of supporting base 13 or inclined.

Preferably, according to the invention, layer 15 of friction material and, correspondingly, wall 19, include a plurality, for instance a dozen, of said channels 21 and 23, regularly distributed over the surface of layer 15.

Always in accordance with the invention, at least one device 25 capable of generating a magnetic field is arranged inside the first collecting chamber 17a.

Moreover, always in accordance with the invention, supporting base 13 can optionally include a collecting reservoir 27, which is preferably removable and in which a corresponding second collecting chamber 17b is defined.

In the illustrated example, collecting reservoir 27 is associated with wall 29 of supporting base 13, opposed and substantially parallel to wall 19, in correspondence of a threaded bore 31. According to such an arrangement, reservoir 27 therefore has a substantially cylindrical shape with an open first base 33 and a closed opposite base 35, and it is externally threaded at least in correspondence of its edge 37 surrounding open base 33. Preferably, reservoir 27 houses, inside the second chamber 17b, for instance on the bottom in correspondence of closed base 35, at least one device 25 capable of generating a magnetic field.

Such devices 25 can be for instance permanent magnets or electro-magnets and, in the latter case, they are powered for instance by the electric circuit of the vehicle on which the brake pad is mounted.

Preferably, in accordance with the invention, supporting base 13 includes a portion 13 without friction material, and at least one slot or a mesh 41 defining a corresponding channel communicating with collecting chamber 17a is defined in correspondence with such portion.

In accordance with the invention, pad 11 may include channels 21 and 23 passing through layer 15 and wall 19, respectively, and lack slot 41, or it may lack channels 21, 23 and include said slot 21 on the portion lacking the friction material, or yet it may include both channel 21 passing through the friction material and channel 23 passing through wall 19, and slot 41.

Thanks to the provision of channels 21, 23 and/or of slot 41, the powder produced during braking, that is during contact between layer 15 of friction material and disk DS, is directed into collecting chamber 17a. Moreover, since such powders generally are rich in ferrous materials, they are advantageously attracted by the magnetic fields produced by devices 25.

Advantageously, in accordance with the invention, slot 41 is arranged downstream layer 15 of friction material in the prevailing rotation direction of disk DS shown by arrow "F".

When chamber 17a is full, the powder can be removed and possibly sucked by removing reservoir 27. However, in a variant embodiment of the invention, the reservoir can be replaced by a plug.

The transversal thickness of brake pad 11, which is the sum of the thicknesses of supporting base 13 and layer 15 of friction material, may be adjusted by taking into account the need to house pad 11 within the existing brake assemblies. Consequently, in order a chamber 17 with a sufficiently great collecting volume can be defined, it might be necessary to increase the thickness of supporting base 13 to the expenses of the thickness of layer 15 of friction material.

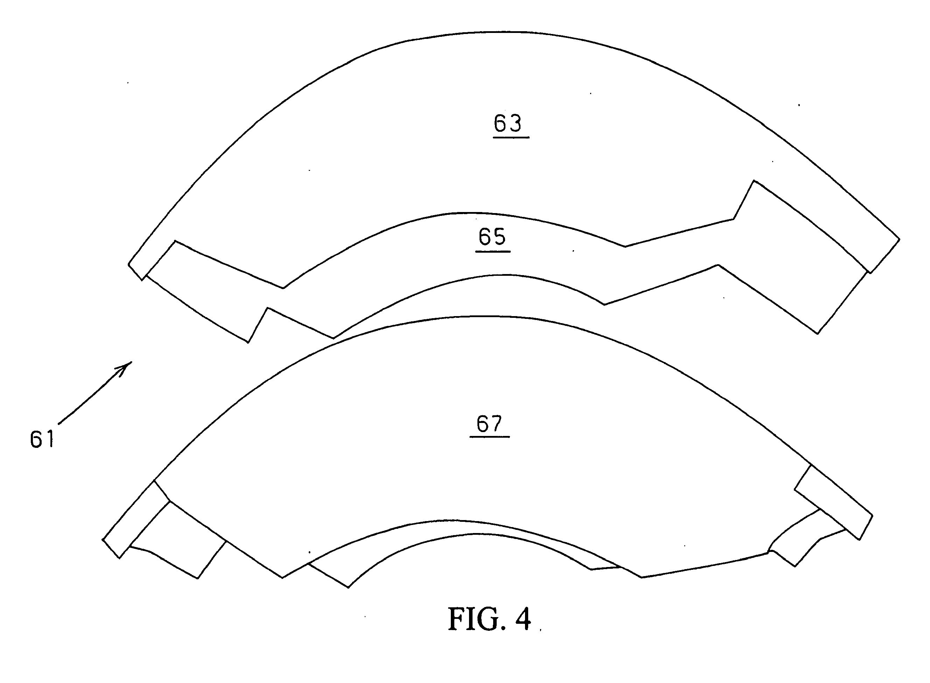

Turning now to Figs. 4 and 5, there is shown a collecting device, generally denoted by reference numeral 61, which can be optionally associated with the caliper holder where brake pad 11 is mounted, in order to increase the capacity of powder retention.

Said collecting device comprises a first arc-shaped body 63 with a box structure, made for instance of metal or plastics, where a hollow 65 is defined that is intended to receive a complementary member 67 made of a material capable of retaining the powders, in particular fine powders, for instance a cellulose-based material. Moreover, said body 63 can advantageously be made integral with the caliper holder where brake pad 11 is mounted.

Always in accordance with the invention, collecting device 61 may internally incorporate devices 25 capable of generating a magnetic field, which are preferably located between member 67 and the wall of cavity 65.

In accordance with the invention, member 67 is preferably removable and thus it can be replaced when it is full or worn. Moreover, said member 67 can be fastened inside cavity 65 by known means, such as Velcro, press studs or adhesive.

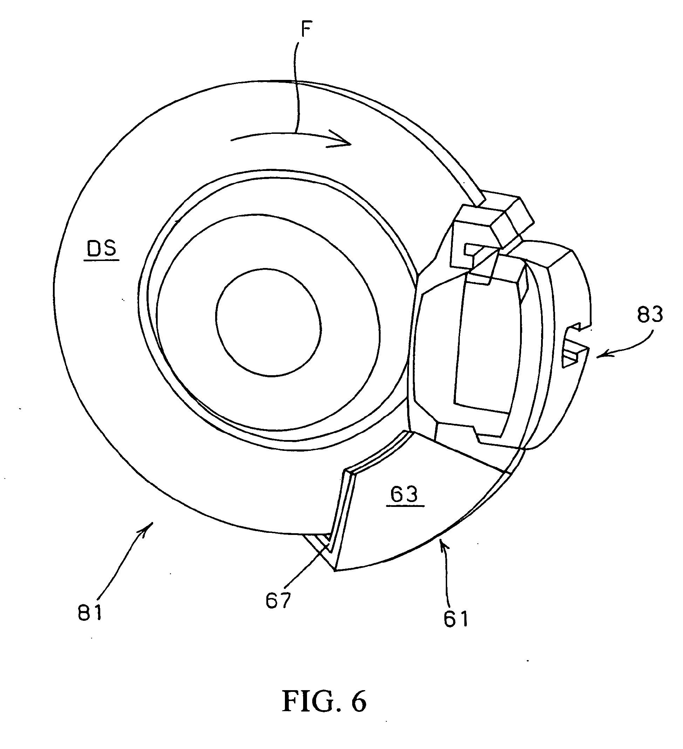

Turning to Fig. 6, there is shown a brake assembly, generally denoted by reference numeral 81, which is equipped with calipers 83 where a pair of pads 11 according to the invention is housed.

Said brake assembly is associated with a brake disk DS and further includes a collecting device 61 located downstream calipers 83 with respect to the preferred rotation direction of disk DS shown by arrow "F".

## Claims

1. A disk brake pad (11) comprising a supporting base (13) with which a layer (15) of friction material is associated and a powder collecting chamber (17a) defined in correspondence of the supporting base for collecting the powders produced due to the wear of the friction material, **characterized in that** said chamber communicates with at least one channel (21, 23, 41) passing through a wall (19) of the supporting base having associated therewith the layer of friction material and **in that** a magnetic field is provided inside said chamber which field is capable of exerting a magnetic attracting force on the particles of material produced due to the wear of the friction layer and the brake disk.

2. The brake pad as claimed in claim 1, wherein said at least one channel (21, 23, 41) extends through the layer (15) of friction material.

3. The brake pad as claimed in claim 1, wherein said at least one channel extends through a portion (39) without friction material of said wall (19) on which the friction material adheres.

4. The brake pad as claimed in claim 1 or 2 or 3, wherein the layer (15) of friction material, and correspondingly the wall (19) on which said layer adheres, comprise a plurality of said channels (21, 23, 41).

5. The brake pad as claimed in any preceding claims, wherein the supporting base is a hollow supporting base provided with at least one channel communicating with the surface of the supporting base with which the layer of friction material is associated.

6. The brake pad as claimed in any preceding claim, wherein the supporting base (13) includes a collecting reservoir (27) in which a corresponding second collecting chamber (17b) is defined.

7. The brake pad as claimed in claim 6, wherein the collecting reservoir (27) is associated with a wall (29) of the supporting base (13) opposed and substantially parallel to said wall (19) of the supporting base having associated therewith the layer of friction material.

8. The brake pad as claimed in claim 7, wherein the reservoir (27) is received in correspondence of a threaded bore (31).

9. The brake pad as claimed in claim 8, wherein the reservoir (27) has a substantially cylindrical shape with an open first base (33) and a closed opposite base (35), and it is externally threaded at least in correspondence of its edge (37) surrounding the open base (33).

10. The brake pad as claimed in claim 1 or 6, wherein at least one device (25) capable of generating a magnetic field is arranged inside the first collecting chamber (17a) or inside the second collecting chamber (17b).

11. The brake pad as claimed in claim 9 and 10, wherein said at least one device (25) capable of generating a magnetic field is housed inside said second chamber (17b) on the bottom in correspondence of its closed base (35).

12. The brake pad as claimed in claim 6, wherein magnetic fields are provided inside both chambers (17a, 17b), which fields are capable of exerting a magnetic attracting force on the particles of material produced due to the wear of the friction layer (15) and the brake disk.

13. A disk brake assembly comprising at least one caliper arranged to house at least one brake pad, **characterised in that** said brake pad is a brake pad as claimed in any of claims 1 to 12.

14. The brake assembly as claimed in claim 13, having associated therewith a collecting device (61) comprising a first arc-shaped body (63) with a box structure where a hollow (65) intended to receive a complementary member (67) made of a material capable of retaining the powders is defined.

15. The brake assembly as claimed in claim 14, wherein said complementary member is made of a cellulose-based material.

16. The brake assembly as claimed in claim 15, wherein said collecting device further internally comprises devices (25) capable of generating a magnetic field.

## Patentansprüche

1. Scheibenbremsklotz (11) mit einem Tragkörper (13), der mit einer Schicht (15) aus Reibmaterial verbunden ist und mit einer Pulversammelkammer (17a), die zusammen mit dem Tragkörper zum Sammeln des infolge des Verschleißes des Reibbelags erzeugten Pulvers vorgesehen ist, **dadurch gekennzeichnet, dass** die Kammer mit mindestens einem Kanal (21, 23, 41) in Verbindung steht, der eine Wandung (19) des Tragkörpers durchdringt, der mit der Schicht aus Reibmaterial verbunden ist, und dass innerhalb der Kammer ein Magnetfeld vorgesehen ist, das eine magnetische Anziehungskraft auf die infolge des Verschleißes des Reibbelags und der Bremsscheibe entstehenden Partikel ausübt.

2. Bremsklotz nach Anspruch 1,
wobei sich der mindestens eine Kanal (21, 23, 41) durch die Schicht (15) aus Reibmaterial erstreckt.

3. Bremsklotz nach Anspruch 1,
wobei sich der mindestens eine Kanal durch einen Abschnitt (39) ohne Reibmaterial der Wandung (19) erstreckt, an der das Reibmaterial haftet.

4. Bremsklotz nach Anspruch 1 oder 2 oder 3,
wobei die Schicht (15) aus Reibmaterial und entsprechend die Wandung (19), an der die Schicht haftet, eine Vielzahl der Kanälen (21, 23, 41) aufweist.

5. Bremsklotz nach einem der vorhergehenden Ansprüche,
wobei der Tragkörper ein hohler Tragkörper mit mindestens einem Kanal ist, der mit der Oberfläche des Tragkörpers in Verbindung ist, an der die Schicht aus Reibmaterial vorgesehen ist.

6. Bremsklotz nach einem der vorhergehenden Ansprüche,
wobei der Tragkörper (13) einen Sammelbehälter (27) aufweist, in dem eine entsprechende zweite Sammelkammer (17b) gebildet ist.

7. Bremsklotz nach Anspruch 6,
wobei der Sammelbehälter (27) mit einer Wandung (29) des Tragkörpers (13) verbunden ist, die der Wandung (19) des Tragkörpers mit der mit ihm verbundenen Schicht aus Reibmaterial gegenüber liegt und im Wesentlichen parallel zu ihr verläuft.

8. Bremsklotz nach Anspruch 7,
wobei der Behälter (27) über eine Gewindebohrung (31) aufgenommen ist.

9. Bremsklotz nach Anspruch 8,
wobei der Behälter (27) eine im Wesentlichen zylindrische Form mit einer offenen ersten Grundseite (33) und einer geschlossenen gegenüberliegenden Grundseite (35) und zumindest an seinem die offene Grundseite (33) umgebenden Rand (37) Außengewinde hat.

10. Bremsklotz nach Anspruch 1 oder 6,
wobei mindestens eine, zum Aufbau eines Magnetfelds geeignete Einrichtung (25) innerhalb der ersten Sammelkammer (17a) oder innerhalb der zweiten Sammelkammer (17b) angeordnet ist.

11. Bremsklotz nach Anspruch 9 und 10,
wobei mindestens die eine, zum Aufbau eines Magnetfelds geeignete Einrichtung (25) innerhalb der zweiten Kammer (17b) auf dem Boden mit ihrer geschlossenen Grundseite (35) angeordnet ist.

12. Bremsklotz nach Anspruch 6,
wobei Magnetfelder innerhalb beider Kammern (17a, 17b) vorgesehen sind, die eine magnetische Anziehungskraft auf die infolge des Verschleißes der Schicht (15) aus Reibmaterial und der Bremsscheibe erzeugten Partikel ausüben können.

13. Bremsscheibenanordnung mit zumindest einem Sattel, der zur Aufnahme mindestens eines Bremsklotzes vorgesehen ist,
**dadurch gekennzeichnet, dass** der Bremsklotz ein Bremsklotz gemäß einem der Ansprüchen 1 bis 12 ist.

14. Bremsanordnung nach Anspruch 13,
die mit einer Sammeleinrichtung (61) verbunden ist, die einen ersten bogenförmigen Bauteil (63) mit einer Gehäuseform aufweist, in dem zur Aufnahme eines Komplementärteils (67) ein Hohlraum (65) versehen ist, der aus einem zum Zurückhalten der Pulver geeigneten Werkstoff besteht.

15. Bremsanordnung nach Anspruch 14,
wobei das Komplementärteil aus einem Werkstoff auf der Basis von Zellulose hergestellten Werkstoff besteht.

16. Bremseinheit nach Anspruch 15,
wobei die Sammeleinrichtung außerdem im Inneren Einrichtungen (25) aufweist, die zum Aufbau eines Magnetfelds geeignet sind.

## Revendications

1. Plaquette de frein à disque (11) comportant une base de support (13) à laquelle est associée une couche (15) de matériau de frottement et une chambre de collecte de poudre (17a) définie en correspondance avec la base de support en vue de recueillir les poudres produites en raison de l'usure du matériau de frottement, **caractérisée en ce que** ladite chambre communique avec au moins un canal (21, 23, 41) passant à travers une paroi (19) de la base de support présentant, associée à celle-ci, la couche de matériau de frottement et **en ce que** un champ magnétique est fourni à l'intérieur de ladite chambre, lequel champ est capable d'exercer une force d'attraction magnétique sur les particules de matériau produites en raison de l'usure de la couche de friction et du disque de frein.

2. Plaquette de frein selon la revendication 1, dans laquelle ledit au moins un canal (21, 23, 41) s'étend à travers la couche (15) de matériau de frottement.

3. Plaquette de frein selon la revendication 1, dans laquelle ledit au moins un canal s'étend à travers une partie (39) dépourvue du matériau de frottement de ladite paroi (19) sur laquelle adhère le matériau de frottement.

4. Plaquette de frein selon la revendication 1 ou 2 ou 3, dans laquelle la couche (15) de matériau de frottement et, de façon correspondante, la paroi (19) sur laquelle ladite couche adhère, comportent une pluralité desdits canaux (21, 23, 41).

5. Plaquette de frein selon l'une quelconque des revendications précédentes, dans laquelle la base de support est une base de support creuse dotée d'au moins un canal communiquant avec la surface de la base de support à laquelle la couche de matériau de frottement est associée.

6. Plaquette de frein selon l'une quelconque des revendications précédentes, dans laquelle la base de support (13) comporte un réservoir de collecte (27) dans lequel est définie une seconde chambre de collecte correspondante (17b).

7. Plaquette de frein selon la revendication 6, dans laquelle le réservoir de collecte (27) est associé à une paroi (29) de la base de support (13) opposée et essentiellement parallèle à ladite paroi (19) de la base de support présentant associée à elle la couche de matériau de frottement.

8. Plaquette de frein selon la revendication 7, dans laquelle le réservoir (27) est reçu en correspondance avec un trou taraudé (31).

9. Plaquette de frein selon la revendication 8, dans laquelle le réservoir (27) présente une configuration essentiellement cylindrique dotée d'une première base ouverte (33) et d'une base opposée fermée (35), et il est fileté à l'extérieur au moins en correspondance avec son bord (37) entourant la base ouverte (33).

10. Plaquette de frein selon la revendication 1 ou 6, dans laquelle au moins un dispositif (25) capable de générer un champ magnétique est disposé à l'intérieur de la première chambre de collecte (17a) ou à l'intérieur de la seconde chambre de collecte (17b).

11. Plaquette de frein selon la revendication 9 et 10, dans laquelle ledit au moins un dispositif (25) capable de générer un champ magnétique est logé à l'intérieur de ladite seconde chambre (17b) sur le fond en correspondance avec sa base fermée (35).

12. Plaquette de frein selon la revendication 6, dans laquelle des champs magnétiques sont fournis à l'intérieur des deux chambres (17a, 17b), lesquels champs sont capables d'exercer une force d'attraction magnétique sur les particules de matériau produites en raison de l'usure de la couche de friction (15) et du disque de frein.

13. Ensemble de frein à disque comportant au moins un étrier de frein agencé en vue de loger au moins une plaquette de frein, **caractérisé en ce que** ladite plaquette de frein est une plaquette de frein selon l'une quelconque des revendications 1 à 12.

14. Ensemble de frein selon la revendication 13, comportant, associé à lui, un dispositif de collecte (61) comprenant un premier corps configuré en forme d'arc (63) doté d'une structure de boîte dans laquelle une partie creuse (65), conçue pour recevoir un élément complémentaire (67) constitué d'un matériau capable de retenir les poudres, est définie.

15. Ensemble de frein selon la revendication 14, dans lequel ledit élément complémentaire est constitué d'un matériau à base de cellulose.

16. Ensemble de frein selon la revendication 15, dans lequel ledit dispositif de collecte comporte, de plus, intérieurement, des dispositifs (25) capables de générer un champ magnétique.
